Europäisches Patentamt

European Patent Office

Office européen des brevets

(19)

(11) **EP 0 567 931 B1**

(12) **EUROPEAN PATENT SPECIFICATION**

(45) Date of publication and mention
of the grant of the patent:
**01.07.1998 Bulletin 1998/27**

(51) Int Cl.⁶: **H04N 5/44**, H04N 3/32

(21) Application number: **93106577.5**

(22) Date of filing: **22.04.1993**

(54) **Method and apparatus for improving sharpness of pictures**

Verfahren und Vorrichtung zur Verbesserung der Bildschärfe

Méthode et appareil d'amélioration de la netteté d'image

(84) Designated Contracting States:
**DE FR GB IT**

(30) Priority: **30.04.1992 EP 92401233**

(43) Date of publication of application:
**03.11.1993 Bulletin 1993/44**

(73) Proprietor: **THOMSON multimedia
92648 Boulogne Cédex (FR)**

(72) Inventors:
• **Boie, Werner
F-67100 Strasbourg (FR)**
• **Bolender, Nadine
F-67000 Strasbourg (FR)**
• **Chevet, Jean-Claude
F-67640 Fegersheim (FR)**

(74) Representative:
**Hartnack, Wolfgang, Dipl.-Ing. et al
Deutsche Thomson-Brandt GmbH
Licensing & Intellectual Property,
Göttinger Chaussee 76
30453 Hannover (DE)**

(56) References cited:
**US-A- 3 980 819**

• **PATENT ABSTRACTS OF JAPAN vol. 11, no. 70
(E-485)3 March 1987**
• **& JP-A-61 225 978 (PIONNEER) 7 October 1986**
• **PATENT ABSTRACTS OF JAPAN vol. 11, no 70
(E-485)3 March 1987 & JP-A- 61 225 978
( PIONNEER ) 7 October 1986**

## Description

The present invention relates to a method and to an apparatus for improving sharpness of pictures.

Background

Spatial Proscan converted (i.e. from a progressive source) interlace pictures exhibit in general unsharp transitions in vertical direction (the Proscan or DIAG3 algorithm is described in EP-A-0561286). This unsharpness is normally due to a vertical interpolation applied at horizontal structures. The result of that kind of upconversion is very often that the original interlace picture looks sharper than the upconverted one. In addition to that, large format colour TV tubes producing a high peak brightness in order to be acceptable in the consumer market possess a large beam current in bright areas and a subsequent defocussing of the resulting spot on the display.

To overcome these fundamental disadvantages the interpolated line, which represents along horizontal structures the center of the transition, should be deflected away from the transition region towards the adjacent line carrying the higher luminance level. That results in an improved sharpness due to an enhanced overshoot of the luminance on the screen without increasing the beam current and a subsequent enlarged spot size as it is the case with a peaking technique.

In WO-A-92/05661 and US-A-3980819 a method for vertical sharpness improvement using a luminance level dependent deflection is described. But special problems in connection with progressive sources for the input signal are not considered. The deflection is uniform for all lines.

In JP-A-61225978 interpolated lines are shifted in order to display smooth circles or oblique lines.

Invention

It is one object of the invention to disclose a method of sharpness improvement for progressive pictures which stem from an interlaced source. This object is achieved by the method disclosed in claim 1.

The behaviour of a VSM (vertical scan modulation) method depends strongly on the properties of the incoming signal that means whether the input signal stems originally from an interlace source or a really progressive one. Because of the nature of the spatial Proscan algorithm the upconverted pictures will have an ambiguous vertical transition along horizontal structures within the interpolated lines. The best solution implying a linear filter technique for the interpolation represents the vertical interpolation or for a simpler solution vertical average like in the Proscan algorithm. The vertical transition in that case reaching over two lines leads nevertheless to a significant reduction of sharpness in vertical direction. Since there is only the interpolated line which is uncertain with its amplitude, only this line should be deflected in vertical direction. This strategy has several advantages over a VSM algorithm which creates for each line a deflection signal:

- Firstly, due to the fact that the original lines are not shifted the objects within the picture will keep its original size. That is not the case if also the original lines will be shifted. This can lead to an extension of the black regions and the pictures become more coarser than the original ones. Also some black holes can appear between a grey/white transition.
- Secondly, by using a deflection signal for each line the interlace artefacts may be increased because the contours of the objects appear shifted from its original position. These effects have been observed in moving picture parts with fine details in which a new annoying moving structure came up. Such effects cannot occur, if only the interpolated line is shifted.
- Thirdly, if this VSM technique is applied in conjunction with a Proscan algorithm, no additional line delay becomes necessary.

Furthermore the vertical deflection should be restricted to horizontal structures or real vertical transitions, respectively. This has also many advantages. This restriction avoids:

- Firstly, this restriction avoids that again a staircase structure will be introduced at declined structures.
- Secondly, the processed pictures look more natural in real scenes with human faces including the teeth.
- Thirdly, the additional deflection only at horizontal structures ensures a flat field reproduction in all other parts of the picture.

By this the properties of the Proscan algorithm can be kept and the picture quality is not compromised again by "old" interlace distortions or even new artefacts.

The achieved overshoot and the resulting sharpness at vertical transitions depend strongly on the luminance amplitude

EP 0 567 931 B1

and the deflection amplitude of the shifted line. In order to have a high noise immunity of this sensitive processing the resulting luminance amplitude of the shifted line as well as the vertical deflection is strongly dependent on the current video signal (soft decision). Also some kind of noise reducing processing (averaging) has been foreseen, but nevertheless the resulting deflection signal can occur with a sharp transition and necessitates therefore a high bandwidth for a voltage-current converter which drives the additional deflection coil.

In principle the inventive method consists in improving the sharpness of pictures displayed with a line structure on a picture tube, whereby the beam of said tube is deflected in vertical direction in relation to brightness transitions with at minimum a vertical component and said deflection is made only for such lines which are located in-between and are interpolated from original lines of a field.

Advantageous additional embodiments of the inventive method are resulting from the respective dependent claims.

It is a further object of the invention to disclose an apparatus which utilizes the inventive method. This object is achieved by the apparatus disclosed in claim 10.

In principle the inventive apparatus comprises a picture tube and an interlace-progressive upconverter circuit and a vertical scan modulation unit which generates a signal for additional deflection of the beam of said tube in vertical direction in relation to brightness transitions with at minimum a vertical component of lines passed from the output of said upconverter circuit to the input of said modulation unit, whereby said additional deflection is made only for such lines which are located in-between and are interpolated from original lines of a field and whereby said modulation unit also changes the brightness of according pixels of said interpolated lines in relation to said brightness transitions.

Drawings

Preferred embodiments of the invention are described with reference to the accompanying drawings, which show in:

Fig. 1     the principle of the vertical scan modulation;
Fig. 2     a vertical edge with accompanying luminance amplitude differences;
Fig. 3     a diagonal edge with accompanying luminance amplitude differences;
Fig. 4     a diagonal edge with unsharp transition;
Fig. 5     amplitude differences at a horizontal transition and schema of the generated differences (diagonal L);
Fig. 6     schema of the generated differences (diagonal R);
Fig. 7     circuit for horizontal averaging.

Preferred embodiments

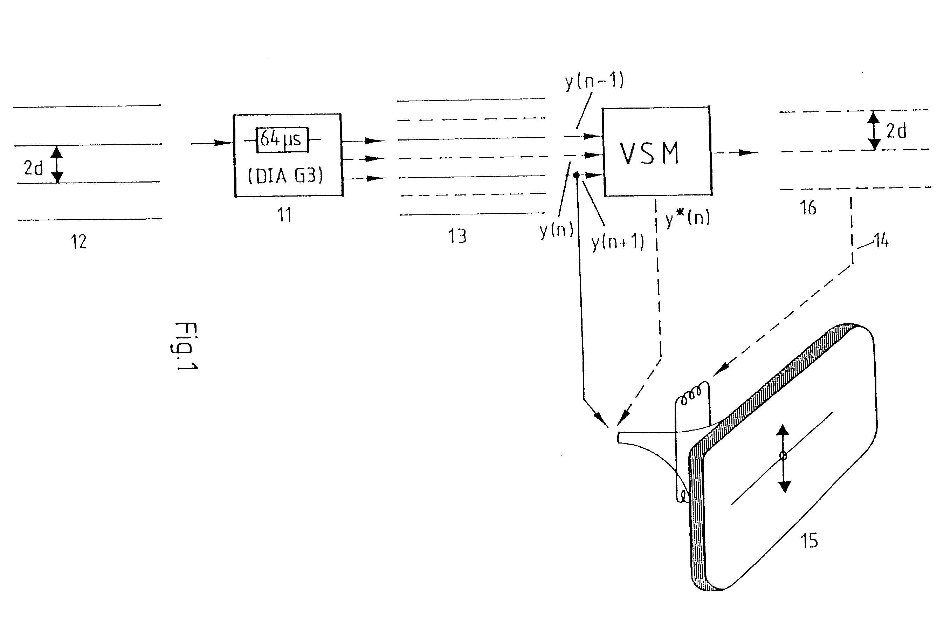

As mentioned above the inventive VSM will generate an additional vertical deflection signal only for the interpolated lines. Fig. 1 gives an overview of the processing. The spatial Proscan circuit 11 supplies from each input field 12 an output frame 13 containing all the lines which are necessary for the VSM processing. That means the actual line y (n+1), the delayed line y(n-1) and the interpolated line y(n) go into the VSM processing unit which itself generates a deflection signal 14 corresponding to the interpolated line y(n) and generates modified interpolated lines y*(n) with modified amplitude compared to the original interpolated line y(n). The deflection signal 14 is used only for the interpolated lines 16 of the frame 13. The tube 15 receives the original lines y(n-1), y(n+1) and the modified interpolated lines y*(n) and the additional deflection signal 14.

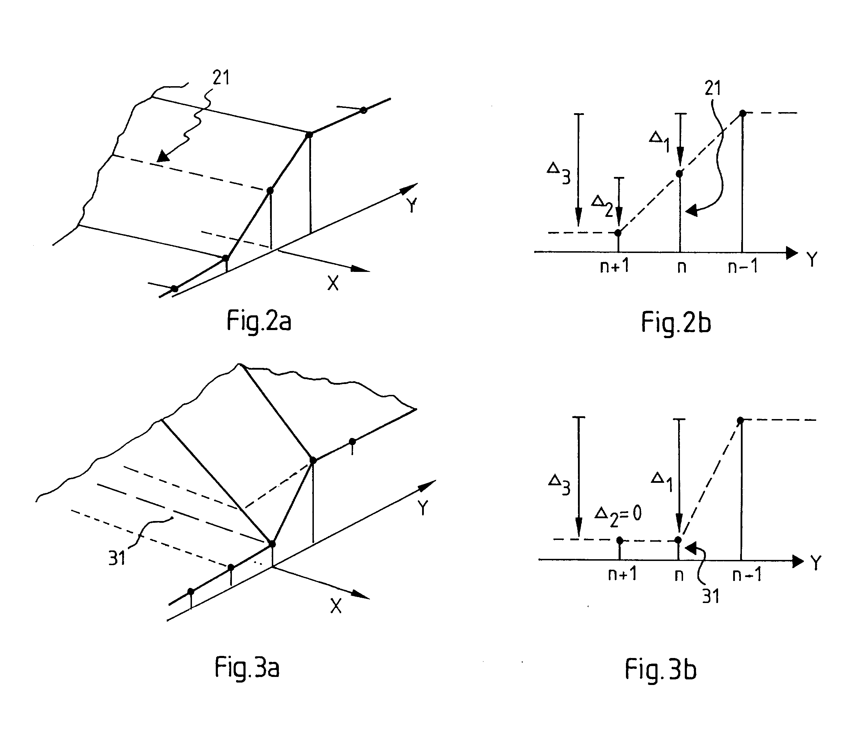

One essential requirement the VSM has to meet is the detection of the horizontal structures because only there the scan modulation technique should be applied in order to keep the properties of the Proscan algorithm. For that reason the VSM method is based on the assumption that at horizontal structures due to the vertical average the vertical transition reaches over two lines. That situation is depicted in Fig. 2. Fig. 2a shows in a three-dimensional view the vertical transition and Fig. 2b depicts amplitude differences at this transition: a first difference $\Delta_2$ between the interpolated line n, 21 and line n+1, a second difference $\Delta_1$ between line n-1 and the interpolated line n and a third difference $\Delta_3$ between line n-1 and line n+1.

For a diagonal structure it is assumed that the vertical transition reaches normally only over one line. Fig. 3a and 3b illustrate this case respectively. Therefore the first difference $\Delta_2$ between the interpolated line n, 31 and line n+1 is zero and the second difference $\Delta_1$ between line n-1 and the interpolated line n is equal to the third difference $\Delta_3$ between line n-1 and line n+1.

At a first stage within the VSM processing unit it is checked if there is the same sign of the gradient between line y(n-1), line y(n) and line y(n+1) and if the absolute values of both gradients exceed also a given threshold, e.g. of value 16 in case of 8-bit input samples. That means: In principle VSM is enabled,

IF {($\Delta_1$ > threshold AND $\Delta_2$ > threshold) OR
    ($\Delta_1$ (-threshold) AND $\Delta_2$ < (-threshold))}

3

THEN TEST = '1',
with $\Delta_2$ = y(n)-y(n+1), $\Delta_1$ = y(n-1)-y(n).
This gives already a very rough selection if the VSM should be enabled or not.

In a first approach the VSM internal enabling control signal a can be generated according to the following formula:
IF TEST = '1' THEN $\alpha = |\Delta_3| - ||\Delta_1|-|\Delta_2||$
ELSE $\alpha = 0$,
with $\Delta_3$ = y(n-1)-y(n+1) and $\Delta_1$ and $\Delta_2$ as given above.

In this formula two limit cases are to be regarded:

- if y(n) is a vertically interpolated value (see Fig. 2), $\Delta_1$ equals $\Delta_2$ and $\alpha$ will become a maximum with $\alpha = |\Delta_3|$;
- if there is a diagonal structure as given in Fig. 3, $\alpha$ will become zero, i.e.
  IF {($\Delta_1 = 0$ AND $\Delta_2 = \Delta_3$) OR
      ($\Delta_2 = 0$ AND $\Delta_1 = \Delta_3$)} $\alpha = 0$

For a deflection signal 14 (defl) which should not be affected by the quantization error of the signal itself a resolution of 3 bits is at least necessary (that means a 7-step staircase function should be applied). Moreover, the control signal $\alpha$ has to be clipped ($\alpha_{lim}$) and to be signed by the wanted deflection direction. According to that the deflection signal defl must be:

defl = staircase($\alpha_{lim}$),

with $\alpha_{lim} = 128 + sign(\Delta_1) * min(\delta, 127)$, $\delta = \alpha$ and 8-bit pixel resolution.

In order to increase the effect of the edge enhancement the luminance value y(n) of the shifted line is advantageously modified according to the formula:

$$y^* (n) = min[y(n)*(1 + \delta*fac1/256), 255].$$

Furthermore the modified signal should not exceed the maximum luminance value of both neighbouring lines:

$$y^*(n) = min[y^*(n), max(y(n-1), y(n+1))].$$

Herein the factor fac1 evaluated by 1.5 has its major influence on transitions between black and grey levels.

This first approach of the inventive VSM method can significantly improve the sharpness at vertical transitions along horizontal structures, but unfortunately also parts of diagonal contours can be detected as separated small horizontal structures. As a result of this some staircase patterns may occur. The reason for this can be explained by means of the transition time of the edges in horizontal direction.

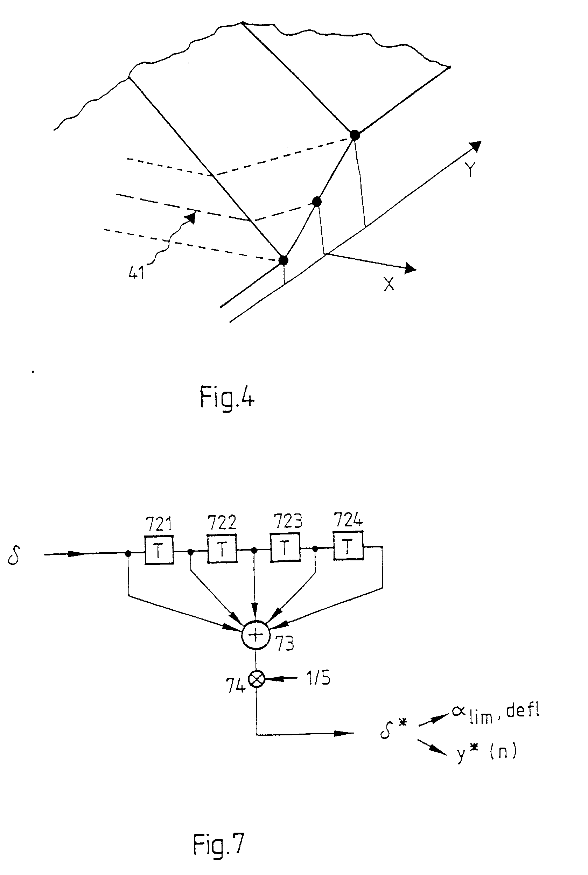

Fig. 4 reflects the situation of a diagonal edge. Due to a horizontal transition reaching over two pixels the VSM method can find a vertical transition over two lines as it was depicted in Fig. 2b. The situation in Fig. 4 is not the only one which can happen, also more extended transitions are possible in natural pictures. The result is that a control signal $\alpha$ is created for a certain number of pixels belonging to a certain part of a declined structure. To put this findings into other words, the VSM method will work accurately if the video signal has a maximum of horizontal resolution and sharpness corresponding to a given sampling frequency.

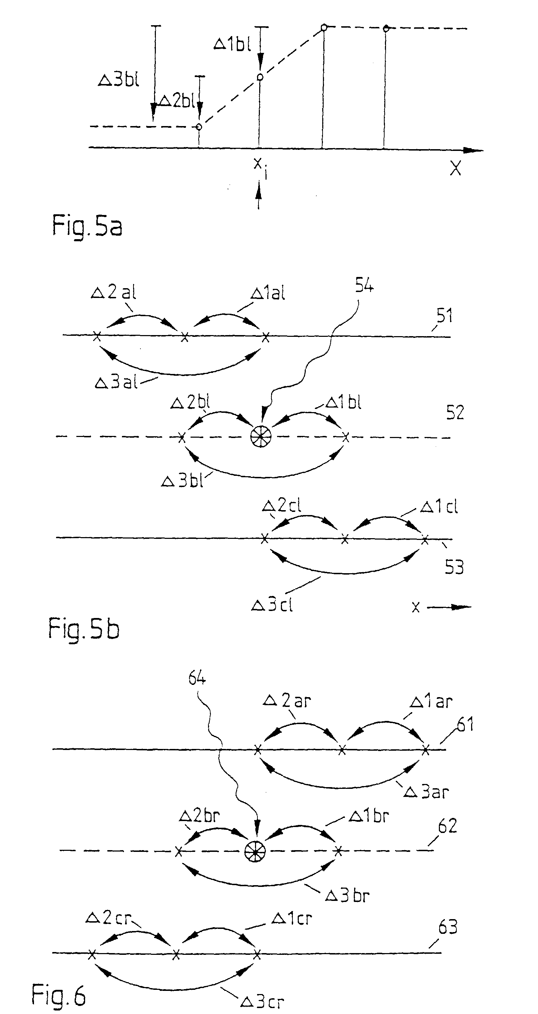

In order to overcome these difficulties a detection of the diagonal structures becomes necessary which is more sensitive f.i. than in said Proscan (DIAG3) algorithm, because Proscan exhibits certain ambiguities. The basic idea of how to overcome these problems is to extend the first approach by detecting horizontal transitions which have a transition length of more than one pixel as shown in Fig. 5a. For a better selectivity the same technique should be applied in the adjacent lines but with a horizontal offset of one pixel as depicted in Fig. 5b. Three lines 51 (a), 52 (b) and 53 (c) are depicted, whereby interpolated line 52 includes the current pixel 54 ($x_i$). By this one can achieve the maximum sensitivity in diagonal direction. By means of separate averages over the various kind of the absolute values a correction value $\varepsilon_1$ can be created:

$$\varepsilon_1 = fac2 \{ |\Delta_{3a}| + |\Delta_{3b}| + |\Delta_{3c}|$$

$$+||\Delta_{1a}| + |\Delta_{1b}| + |\Delta_{1c}| - |\Delta_{2a}| - |\Delta_{2b}| - |\Delta_{2c}|| \}$$

with fac2 = 0.5 .

Obviously, the other diagonal direction has also to be checked. For that reason a second correction value $\varepsilon_r$ has

to be introduced (see Fig. 6):

$$\varepsilon_r = \text{fac2} \{ \left|\Delta_{3ar}\right| + \left|\Delta_{3br}\right| + \left|\Delta_{3cr}\right|$$

$$+ \left\| \left|\Delta_{1ar}\right| + \left|\Delta_{1br}\right| + \left|\Delta_{1cr}\right| - \left|\Delta_{2ar}\right| - \left|\Delta_{2br}\right| - \left|\Delta_{2cr}\right| \right\| \}$$

Three lines 61 (a), 62 (b) and 63 (c) are depicted, whereby interpolated line 62 includes the current pixel 64 ($x_i$).

NB: $\Delta_{1bl} = \Delta_{1br}$
$\Delta_{2bl} = \Delta_{2br}$
$\Delta_{3bl} = \Delta_{3br}$

The resulting control signal 6 can now be formed by :
$$\delta = \max(\alpha - \max(\varepsilon_1, \varepsilon_r), 0)$$
In this formula the correction value $\varepsilon_{l,r}$ compensates in case of a diagonal structure the control signal $\delta$.

Investigations have shown that this algorithm works quite selective that way that only horizontal structures will be detected. The diagonal average of the different kind of absolute values in the above formulas have also proved to be quite effective in terms of noise immunity.

Because of the nature of the correction signal extremely fine horizontal structures, only a few pixels long, cannot be any more detected, but this has been regarded as negligible. Another drawback based on the same principle comes up at the beginning and at the end of a horizontal structure. The resulting control signal has a reduced active time period that means the raising and trailing edge of the control signal are in a region in which the control signal should still have its maximum value. Consequently, at the beginning and the end of the horizontal structure the full sharpness cannot be achieved.

For that reason it is advantageous to average the resulting control signal $\delta$ over five pixels in order to compensate this unwanted effect. In Fig. 7 the control signal $\delta$ is passed through four pixel delays 721, 722, 723 and 724. 6 and its four delayed values are combined in adder 73. Each sum is divided by five in multiplier 74. The output control signal $\delta^*$ is then used in the VSM processing unit to calculate $\alpha_{lim}$, defl and $y^*(n)$. Despite of that kind of lowpass filtering the resulting control signal can after the control signal clipping raise or fall off very quickly so that the voltage-to-current converter necessary for driving the deflection coil should have a high bandwidth.

The proposed VSM technique comes up with a significantly improved picture sharpness while the picture quality is not compromized by new artefacts introduced by the VSM algorithm. Advantageously also a respective horizontal scan modulation technique can be added.

The soft decision for the generation of the deflection signal as well as for the modification of the luminance level in the interpolated lines has proved to be a necessity in terms of curved structures. Due to several applied averaging techniques the inventive method comes up with a relatively good noise immunity.

**Claims**

1. Method for improving sharpness of pictures displayed with a line structure on a picture tube (15), wherein for respective line partitions the beam of said tube is additionally deflected (VSM, 14) in vertical direction - the amount of said additional deflection being dependent upon the variation in brightness ($\Delta_3$) across vertical transitions - to the bright side of the brightness transition region in order to compensate for reduced resolution caused by large, brightness-dependent spot diameter, **characterised** in that an interlace format picture signal (12) is displayed as a progressive format picture signal (13), wherein said additional deflection is carried out for partitions of such progressive format lines only (16, 21, 31, 41, n) which are located in-between the interlace format lines (12) and for such brightness transitions only which include three successive lines (y(n-1), y(n), y(n+1)) of said progressive format picture signal.

2. Method according to claim 1, wherein said additional deflection (VSM, 14) is carried out in case of a horizontal structure of said brightness transitions only.

3. Method according to claim 1 or 2, wherein, in order to distinguish between horizontal and diagonal structures of said brightness transitions, brightness transitions located in diagonal direction in adjacent lines of said progressive format are evaluated, too.

4. Method according to any of claims 1 to 3, wherein said deflection is composed of a predetermined standard vertical deflection and an additional vertical deflection (VSM, 14).

5. Method according to any of claims 1 to 4, wherein the amount and the sign of said additional vertical deflection (VSM, 14) is a staircase function relating to pixel difference values of said brightness transitions and wherein a limitation is included.

6. Method according to any of claims 1 to 5, wherein the brightness of respective pixels ($x_i$) of said interpolated lines (16, 21, 31, 41, n) is modified according to pixel difference values derived from the slope and/or from the direction of said brightness transitions.

7. Method according to claim 6, wherein said brightness modification is stronger between black and grey than between grey and white.

8. Method according to any of claims 1 to 7, wherein a control signal from which the amount of said additional deflection and/or the amount of said brightness modification is derived is averaged over several, especially five, pixels.

9. Method according to any of claims 1 to 8, wherein a respective additional deflection in horizontal direction is added to said vertical additional deflection.

10. Apparatus for carrying out a method according to any of claims 1 to 9, for improving sharpness of pictures displayed with a line structure on a picture tube (15), wherein for respective line partitions the beam of said tube is additionally deflected (VSM, 14) in vertical direction - the amount of said additional deflection being dependent upon the variation in brightness ($\Delta_3$) across vertical transitions - to the bright side of the brightness transition region in order to compensate for reduced resolution caused by large, brightness-dependent spot diameter, and comprising:

- an interlace-progressive upconverter circuit (11) generating from an interlace format picture signal (12) lines for a progressive format picture signal (13);
- a picture tube (15) which displays the lines of said progressive format picture signal;
- a vertical scan modulation unit (VSM),

which generates a signal for said additional deflection of the beam in vertical direction , wherein said additional deflection is carried out for partitions of such progressive format lines only (16, 21, 31, 41, n) which are located in-between the interlace format lines (12) and for such brightness transitions only which include three successive lines (y(n-1), y(n), y(n+1)) of said progressive format
and which in particular also changes, in relation to said brightness transitions, the brightness of according pixels ($x_i$) of said additionally deflected line partitions.

**Patentansprüche**

1. Verfahren zur Verbesserung der Schärfe von Bildern, die mit einer Zeilenstruktur auf einer Bildröhre (15) angezeigt werden, bei dem für entsprechende Zeilenunterteilungen der Strahl der Röhre zusätzlich (VSM, 14) in vertikaler Richtung zu der hellen Seite des Helligkeitsübergangsbereichs abgelenkt wird - wobei das Maß der zusätzlichen Ablenkung von der Änderung der Helligkeit ($\Delta_3$) über vertikalen Übergängen abhängt - um eine verminderte Auflösung, die durch große helligkeitsabhängige Leuchtfleckdurchmesser verursacht wird, zu kompensieren, dadurch gekennzeichnet, daß ein Bildsignal (12) mit Zeilensprungformat als Bildsignal (13) mit progressivem Format angezeigt wird, wobei die zusätzliche Ablenkung nur für Unterteilungen solcher Zeilen mit progressivem Format (16, 21, 31, 41, n) durchgeführt wird, die zwischen den Zeilen (12) mit Zeilensprungformat liegen, und nur für solche Helligkeitsübergänge, die drei aufeinanderfolgende Zeilen (y(n-1), y(n), y(n+1) des Bildsignals mit progressivem Format einschließen.

2. Verfahren nach Anspruch 1, bei dem die zusätzliche Ablenkung (VSM, 14) nur im Falle einer horizontalen Struktur des Helligkeitsübergangs durchgeführt wird.

3. Verfahren nach Anspruch 1 oder 2, bei dem zur Unterscheidung zwischen horizontalen und diagonalen Strukturen der Helligkeitsübergänge auch Helligkeitsübergänge bestimmt werden, die in diagonaler Richtung in benachbarten Zeilen des progressiven Formats liegen.

**EP 0 567 931 B1**

**4.** Verfahren nach einem der Ansprüche 1 - 3 bei dem die Ablenkung aus einer vorbestimmten Norm - Vertikalablenkung und einer zusätzlichen Vertikalablenkung (VSM, 14) zusammengesetzt ist.

**5.** Verfahren nach einem der Ansprüche 1 - 4, bei dem das Maß und das Vorzeichen der zusätzlichen Vetikalablenkung (VSM, 14) eine Treppenfunktion ist, die sich auf Pixel-Differenzwerte der Helligkeitsübergänge bezieht, und bei dem eine Begrenzung enthalten ist.

**6.** Verfahren nach einem der Ansprüche 1 - 5, bei dem die Helligkeit von entsprechenden Pixeln (xi) der interpolierten Zeilen (16, 21, 31, 41, n) gemäß Pixel-Differenzwerten modifiziert wird, die von der Neigung und/oder von der Richtung der Helligkeitsübergänge abgeleitet werden.

**7.** Verfahren nach Anspruch 6, bei dem die Helligkeitsmodifizierung zwischen schwarz und grau stärker ist als zwischen grau und weiß.

**8.** Verfahren nach einem der Ansprüche 1 - 3, bei dem von einem Steuersignal, von dem das Maß der zusätzlichen Ablenkung und/oder das Maß der Helligkeitsmodifizierung abgeleitet wird, der Durchschnitt von mehreren, insbesondere fünf Pixeln gebildet wird.

**9.** Verfahren nach einem der Ansprüche 1 - 8, bei dem eine entsprechende zusätzliche Ablenkung in horizontaler Richtung der zusätzlichen Vertikalablenkung hinzugefügt wird.

**10.** Vorrichtung zur Durchführung des Verfahrens nach einem der Ansprüche 1 - 9 zur Verbesserung der Schärfe von Bildern, die mit einer Zeilenstruktur auf einer Bildröhre (15) angezeigt werden, bei dem für entsprechende Zeilenunterteilungen der Strahl der Röhre zusätzlich (VSM, 14) in vertikaler Richtung zu der hellen Seite des Helligkeitsübergangsbereichs abgelenkt wird - wobei das Maß der zusätzlichen Ablenkung von der Änderung der Helligkeit (A3) über vertikalen Übergängen abhängt - um eine verminderte Auflösung, die durch große helligkeitsabhängige Leuchtfleckdurchmesser verursacht wird, zu kompensieren, und umfassend:

eine Zeilensprung-Progressiv-Aufwärts-Umwandlungsschaltung (11), die aus einem Bildsignal (12) mit Zeilensprungformat Zeilen für ein Bildsignal (13) mit progressivem Format erzeugt;
eine Bildröhre (15), die die Zeilen des Bildsignals mit dem progressiven Format anzeigt;
eine Vertikal-Abtastmodulationseinheit (VSM), die ein Signal für die zusätzliche Ablenkung des Strahls in vertikaler Richtung erzeugt, wobei die zusätzliche Ablenkung nur für Unterteilungen solcher Zeilen (16, 21, 31, 41, n) mit progressivem Format durchgeführt wird, die zwischen Zeilen (12) mit Zeilensprungformat liegen, und nur für solche Helligkeitsübergänge, die drei aufeinanderfolgende Zeilen (y(n-1), y(n), y(n+1) des progressiven Formats einschließen, und die insbesondere auch in bezug auf die Helligkeitsübergänge die Helligkeit von entsprechenden Pixeln (xi) der zusätzlich abgelenkten Zeilenunterteilungen ändert.

**Revendications**

**1.** Méthode d'amélioration de la netteté des images affichées avec une structure linéaire sur un tube cathodique (15), dans laquelle pour des partitions linéaires respectives le faisceau dudit tube est dévié. en plus (VSM, 14) dans le sens vertical - la quantité de ladite déviation supplémentaire dépendant de la variation de luminosité ($\Delta_3$) entre les transitions verticales - vers le côté lumineux de la région de transition de luminosité afin de compenser une résolution réduite causée par un diamètre de point lumineux dépendant de la luminosité important, caractérisée en ce qu'un signal d'image de format entrelacé (12) est affiché sous forme de signal d'image de format progressif (13), dans laquelle ladite déviation supplémentaire est effectuée pour de telles partitions linéaires de format progressif uniquement (16, 21, 31, 41, n) qui sont situées entre les lignes de format entrelacé (12) et pour de telles transitions de luminosité uniquement qui comportent trois lignes successives (y(n-1), y(n), y(n+1)) dudit signal d'image de format progressif.

**2.** Méthode selon la revendication 1, dans laquelle ladite déviation supplémentaire (VSM, 14) est effectuée en cas de structure horizontale desdites transitions de luminosité uniquement.

**3.** Méthode selon la revendication 1 ou 2, dans laquelle, afin de distinguer entre les structures horizontales et diagonales desdites transitions de luminosité, les transitions de luminosité situées dans le sens diagonal dans des lignes adjacentes dudit format progressif sont aussi évaluées.

**4.** Méthode selon l'une quelconque des revendications 1 à 3, dans laquelle ladite déviation est composée d'une déviation verticale standard prédéterminée et d'une déviation verticale supplémentaire (VSM, 14).

**5.** Méthode selon l'une quelconque des revendications 1 à 4, dans laquelle la quantité et le signe de ladite déviation verticale supplémentaire (VSM, 14) est une fonction en escalier se rapportant aux valeurs de différence d'éléments d'image desdites transitions de luminosité et dans laquelle une limitation est incluse.

**6.** Méthode selon l'une quelconque des revendications 1 à 5, dans laquelle la luminosité d'éléments d'image respectifs ($x_i$) desdites lignes interpolées (16, 21, 31, 41, n) est modifiée selon les valeurs de différence d'éléments d'image dérivées de la pente et/ou du sens desdites transitions de luminosité.

**7.** Méthode selon la revendication 6, dans laquelle ladite modification de luminosité est plus forte entre le noir et le gris qu'entre le gris et le blanc.

**8.** Méthode selon l'une quelconque des revendications 1 à 7, dans laquelle un signal de commande à partir duquel est dérivée la quantité de ladite déviation supplémentaire et/ou la quantité de ladite modification de luminosité est calculé en moyenne sur plusieurs, spécialement cinq, éléments d'image.

**9.** Méthode selon l'une quelconque des revendications 1 à 8, dans laquelle une déviation supplémentaire respective dans le sens horizontal est ajoutée à ladite déviation supplémentaire verticale.

**10.** Appareil pour effectuer une méthode selon l'une quelconque des revendications 1 à 9, pour améliorer la netteté des images affichées avec une structure linéaire sur un tube cathodique (15), dans lequel pour des partitions linéaires respectives le faisceau dudit tube est dévié en plus (VSM, 14) dans le sens vertical - la quantité de ladite déviation supplémentaire dépendant de la variation de luminosité ($\Delta_3$) entre les transitions verticales - vers le côté lumineux de la région de transition de luminosité afin de compenser une résolution réduite causée par un diamètre de point lumineux dépendant de la luminosité important, et comprenant:

- un circuit convertisseur élévateur entrelacé-progressif (11) générant à partir d'un signal d'image de format entrelacé (12) des lignes pour un signal d'image de format progressif (13);
- un tube cathodique (15) qui affiche les lignes dudit signal d'image de format progressif;
- une unité de modulation de balayage vertical (VSM),

qui génère un signal pour ladite déviation supplémentaire du faisceau dans le sens vertical, dans laquelle ladite déviation supplémentaire est effectuée pour de telles partitions linéaires de format progressif uniquement (16, 21, 31, 41, n) qui sont situées entre les lignes de format entrelacé (12) et pour de telles transitions de luminosité uniquement qui comportent trois lignes successives (y(n-1), y(n), y(n+1)) dudit format progressif
et qui en particulier change aussi, en relation auxdites transitions de luminosité, la luminosité d'éléments d'image correspondants ($x_i$) desdites partitions linéaires déviées davantage.

Fig.1

Fig.2b

Fig.3b

Fig.2a

Fig.3a

Fig.4

Fig.7

Fig.5a

Fig.5b

Fig.6